(19) **Europäisches Patentamt**
**European Patent Office**
**Office européen des brevets**

(11) **EP 4 472 932 B1**

(12) **EUROPEAN PATENT SPECIFICATION**

(45) Date of publication and mention
of the grant of the patent:
**06.05.2026 Bulletin 2026/19**

(21) Application number: **22839221.3**

(22) Date of filing: **14.12.2022**

(51) International Patent Classification (IPC):
*C02F 3/28* (2023.01)     *B01D 21/00* (2006.01)
*C02F 103/28* (2006.01)     *C02F 103/32* (2006.01)
*C02F 3/00* (2023.01)

(52) Cooperative Patent Classification (CPC):
**C02F 3/2846; B01D 21/0045; B01D 21/2411;**
C02F 2003/008; C02F 2103/28; C02F 2103/32;
C02F 2103/325; C02F 2103/327; C02F 2203/006;
C02F 2301/026; C02F 2301/046; Y02W 10/10

(86) International application number:
**PCT/EP2022/085967**

(87) International publication number:
**WO 2023/147924 (10.08.2023 Gazette 2023/32)**

(54) **INSTALLATION FOR MICROBIOLOGICAL WASTE WATER TREATMENT**

ANLAGE ZUR MIKROBIOLOGISCHEN ABWASSERBEHANDLUNG

INSTALLATION DE TRAITEMENT MICROBIOLOGIQUE DES EAUX USÉES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **04.02.2022 EP 22155121**

(43) Date of publication of application:
**11.12.2024 Bulletin 2024/50**

(73) Proprietor: **Paques I.P. B.V.**
**8561 AB Balk (NL)**

(72) Inventors:
• **ZIJLSTRA, Hylcke**
  **8561 EL Balk (NL)**

• **PRINS, Rienk**
  **8561 EL Balk (NL)**
• **MOZES, Erik**
  **8561 EL Balk (NL)**
• **HENDRICKX, Tim Lucas George**
  **8561 EL Balk (NL)**

(74) Representative: **Nederlandsch Octrooibureau**
**P.O. Box 29720**
**2502 LS The Hague (NL)**

(56) References cited:
**WO-A1-2010/036107**     **WO-A1-2019/204044**
**WO-A1-2020/038959**     **DE-A1- 10 005 114**
**US-A- 5 049 278**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD OF THE INVENTION**

The invention relates to a process of microbiologically treating an aqueous liquid comprising biodegradable substrate in an installation comprising (i) a bioreactor containing a biomass sludge and (ii) a biomass separator that is separated from the bioreactor, said biomass separator comprising one or more inclined plate settlers, wherein the process comprises:

- transferring treated fluid that comprises biomass from the upper part of the bioreactor to the upper part of the biomass separator;
- separating the treated fluid into a liquid phase having a reduced biomass content and a fluid phase enriched in biomass in the one or more inclined plate settlers;
- removing liquid phase having a reduced biomass content from the one or more inclined plate settlers; and
- returning at least a part of the fluid phase enriched in biomass from the lower part of the biomass separator to the bioreactor.

The invention further relates to an installation that can be used for carrying out such a process.

**BACKGROUND OF THE INVENTION**

Anaerobic treatment of fluids / waste waters is typically done in a bioreactor, in which (granular) anaerobic biomass converts the organic pollutants into biogas, consisting mainly of methane and carbon dioxide. Typically, inside such bioreactors, devices are installed to separate the produced biogas from the treated fluid, and to separate the biomass from the degassed fluid.

WO 2010/036107 describes a purifier for purification of waste water, comprising a reaction chamber (24) comprising a fermentation chamber (25) and, fitted above the fermentation chamber (25), a settling device (2) for a fluid containing liquid, gas and particulate material, said settling device comprising:

- a settling chamber (3) configured to be filled with the fluid;
- a liquid-discharge (5) for discharging liquid from the settling chamber, the liquid discharge (5) being arranged so as to be close to the liquid level (30) when in operation;
- a fluid inlet (6) configured to supply the fluid into the settling chamber (3) and arranged at essentially the same level as the liquid- discharge (5);
- a particulate material separation device (7); and
- a sludge outlet (8) from the settling chamber (3)

wherein the inlet (6) comprises a gas separation device (4) for separating gas from the fluid, the gas separation device (4) comprising a row of oblique plates (13), the plates (13) being disposed in overlapping and parallel arrangement with their longitudinal axes at an angle to the horizontal such that fluid supplied through the inlet (6) is caused to flow obliquely downward along the oblique plates whilst gas bubbles (34) and/or light particles of the particulate material contained in the liquid are caused to be collected at an underside of one or more of the plates (13), to flow upward and to exit the gas separation device (4) at the inlet (6).

WO 2007/078195 describes a process for the anaerobic purification of waste water using a sludge bed system, which process comprises feeding waste water and optionally recycle water, to the lower part of an upflow reactor, containing mainly granular biomass thus producing biogas in the treatment passing the resulting gas/liquid/solid mixture upward and separating the gas and solid from the liquid in a three phase separator and thereby generating an anaerobic effluent that is withdrawn from the top of the separator, the improvement comprising separating the solids from the liquid in a separator, wherein, above the separation of the gas from the liquid phase, tilted plates, tubes or other tilted internals are installed in the three phase separator body to increase the effective settling surface.

WO 2012/005592 describes a purifier (100) for the purification of waste water, the purifier comprising:

- a reaction vessel (10) for a fluid, the reaction vessel having a reaction chamber (11) and a bottom (12);
- a downer (14) having a top end (91) and a bottom end (92), wherein the top end of the downer is connected to a fluid collector (13) to collect fluid from the reaction vessel (10), and the downer is arranged to transport the fluid towards the bottom (12) of the reaction vessel;
- a solids separation device (20) arranged to separate solids from liquid, the solids separation device comprising a fluid inlet (72) arranged to introduce fluid into the solids separation device and a liquid discharge (56) arranged to remove separated liquid from the solids separation device;

characterized in, that the fluid inlet of the solids separation device (20) is connected to the bottom end (92) of the downer and the solids separation device is located inside the reaction vessel, on or near the bottom (12) of the reaction vessel.

Recycling of microbiologically treated fluid with a high fluid flow rate over the separation device is beneficial for the hydraulic conditions in the bioreactor, as it can be used to create better mixing in the lower part of the bioreactor and a higher liquid up-flow velocity, thereby preventing accumulation of poor-quality anaerobic biomass. This recycle to the bioreactor can also be used to dilute biodegradable substrate to non-toxic concentrations, thus creating better conditions for anaerobic fermentation.

To increase the capacity for fluid recycling, larger or additional separation devices need to be installed. A larger bioreactor, specifically a bioreactor with a larger footprint area (surface area covered), may be required to accommodate these larger or additional separation devices. This results in higher capital costs and operational challenges, such as achieving good mixing between fluid and biomass in the enlarged bioreactor. To achieve the latter, an even higher fluid recycle flow rate may be required, necessitating a further increase in size and/or number of separation devices.

It is known to place separation devices outside of the bioreactor. WO 2020/038959 describes a method for treating an aqueous fluid comprising a biodegradable organic substance in an installation comprising an up-flow bioreactor (1) containing a sludge bed, said sludge bed comprising biomass, an external separator (2), and a conditioning tank (12), wherein the method comprises

- treating the aqueous fluid in the conditioning tank (12); thereafter
- feeding the aqueous fluid from the conditioning tank (12) into a lower part of the bioreactor, contacting the fed fluid with the biomass, thereby forming biogas from the biodegradable organic substance;
- withdrawing the fluid that has been contacted with the biomass from an upper part of the bioreactor, which withdrawn fluid comprises biomass;
- feeding the aqueous fluid comprising the biomass withdrawn from the upper part of the bioreactor into the external separator (2) comprising a separation chamber provided with tilted internals wherein the aqueous fluid comprising the biomass is separated into a liquid phase, which has a reduced biomass content or is essentially free of biomass, and a fluid phase enriched in biomass;
- returning said fluid phase enriched in biomass from the external separator to the bioreactor; and
- returning a part of said liquid phase having a reduced biomass content or being essentially free of biomass, from the external separator (2) to the conditioning tank (12)

EP-A 1 134 194 describes a method for retaining biomass in anaerobic sludge blanket reactors, wherein a solids separator, which has water from the bioreactor flowing through it, is pressurized and a sedimentation of the biomass is carried out under the elevated pressure, characterized in that the mean residence time of the water flowing through the solids separator is less than or equal to the ratio of the gas holding capacity of the water to the gas production by the biomass in the solids separator.

## SUMMARY OF THE INVENTION

The present inventors have developed a process of treating an aqueous liquid comprising biodegradable substrate as defined in the claims. The installation that is used to operate the process of the present invention can achieve solid-liquid separation in the biomass separator at a very high fluid flow velocity, without compromising on separation efficiency and without substantially increasing the total footprint of the installation.

By employing a biomass separator that is separated from the bioreactor, treatment conditions in the bioreactor and separation conditions in the biomass separator can be optimised separately. Furthermore, by ensuring that a high total projected surface area ratio (PSAR) is provided by the one or more inclined plate settlers of the biomass separator, efficient solid-liquid separation can be achieved at a high fluid flow rate in a biomass separator with a small footprint area (relative to the footprint area of the bioreactor).

The invention also provides an installation for microbiologically treating an aqueous liquid comprising a biodegradable substrate, as defined in the claims.

## DETAILED DESCRIPTION OF THE INVENTION

Accordingly, a first aspect of the invention relates to a process of microbiologically treating an aqueous liquid comprising biodegradable substrate as defined in the claims.

The term "or" as used herein is defined as "and/or" unless specified otherwise.

The term "a" or "an" as used herein is defined as "at least one" unless specified otherwise.

The term "biodegradable substrate" as used herein refers to any organic substance that is chemically oxidisable, as can be determined by the Chemical Oxygen Demand (COD) test, as described in ISO 6060:1989. A content of organic substance is generally expressed in g COD, i.e. grams oxygen that is consumed for the oxidation of the organic substance.

The term "biomass" as used herein refers to non-dissolved organic matter, including active micro-organisms.

The term "biomass sludge" as used herein refers to semi-solid slurry having a high content of biomass.

The term "biogas" as used herein refers to gas (e.g. methane, carbon dioxide and mixture of such gases) that is produced in the present process, e.g. by anaerobic digestion of biodegradable substrate by the biomass.

The term "inclined plate settler" as used herein refers to a device that comprises one or more inclined plate elements. An inclined plate settler may, for instance, comprise two or more inclined plate elements in the form of rectangular plates or (circular, triangular, rectangular or hexagonal) open-top cones. Inclined plate settlers can be used for solid-liquid separation as well as gas-liquid separation. To achieve solid-liquid separation, untreated feed liquid flows upwards between the inclined plate elements. During this time solids settle onto the plate elements and slide downwards. Above the inclined plate elements clarified liquid is produced which is drawn off. Below the inclined plate elements the separated particles can be collected as a sludge, which may also be drawn off. To achieve gas-liquid separation, untreated feed liquid flows downwards between the inclined plate elements. During this time gas bubbles gather underneath the plate elements and rise upwards. Beneath the inclined plate elements degassed liquid is produced which is drawn off. Above the inclined plate elements the separated gas bubbles may form a gas phase, which can also be drawn off. An inclined plate settler may also comprise one or more inclined plate elements that form spiral-shaped channels, as described in WO 2020/260354.

The term "aggregate projected surface area" as used herein refers to the horizontal component of the surface area of an inclined plate element. In case the inclined plate element is a rectangular plate or an open top cone, the aggregate projected surface area equals the surface area that is covered by the vertical projection of the inclined plate element onto a horizontal flat surface. In case the inclined plate element forms spiral-shaped channels, the aggregate surface area can exceed the surface area that is covered by its vertical projection in case the spiral turns more than 360°.

The term "footprint area" as used herein in relation to a device or a unit refers to the horizontal surface area that is covered by the vertical projection of the device or unit onto that horizontal surface area. Thus, the footprint area of a standing cylinder equals the surface area of the circular cross section of the cylinder.

Whenever terms such as "above", "below", "upper", "middle", "lower" are used herein, unless indicated otherwise, these terms refer to the position of the installation when it is operational.

The term "upper part" as used herein means the upper 1/2, in particular the upper 1/3 and more particularly the upper 1/4 of a unit. The term "lower part" means the lower 1/2, in particular the lower 1/3 and more particularly the lower 1/4 of a unit.

The term "near" as used herein, unless indicated otherwise, means at a relative height of not more than +/-15 % from the reference point, in particular of not more than +/- 10% from the reference point. The relative height is the distance from the bottom divided between the total height of the unit (height difference between bottom and top).

The requirement $PSAR \geq 2.8 + 0.17A$ means that the minimum PSAR of the one or more inclined plate settlers is dependent on the footprint area of the biomass separator. This dependency is illustrated in the table below for cylindrical biomass separators of different diameter. In these separators inclined plate settlers are mounted that contain a plurality of rectangular plates (plate spacing: 8 cm, plate thickness 8 mm). The plate angle (30-80°), width (0.3-4.0 m) and length (0.4-3.0 m) of the rectangular plates are chosen such that the total projected surface area that is realised by a single settler within the footprint area of the cylindrical biomass separator is maximised. In practice such maximum utilisation will not be achieved as some extra space is needed for closing the open sides of the inclined plate settler and for allowing the device to be fitted within the cylinder. Because of the rectangular form of the inclined plate settlers, open spaces are left between the inside of the cylinder and the four sides of the settler, allowing fluid to flow past the settling device and subsequently to enter the lower end of the settling device. The following table shows how many of these settlers are needed to meet the aforementioned PSAR requirement.

| Diameter separator (in m) | 1.40 | 2.00 | 2.50 | 3.00 | 4.00 | 5.00 | 6.00 |
|---|---|---|---|---|---|---|---|
| A (in m$^2$) | 1.54 | 3.14 | 4.91 | 7.07 | 12.6 | 19.6 | 28.3 |
| | | | | | | | |
| Width of plates (in m) | 0.90 | 1.10 | 1.50 | 1.70 | 2.50 | 3.00 | 4.00 |
| Length of plates (in m) | 0.9 | 1.3 | 1.5 | 1.7 | 2.5 | 3.0 | 3.0 |
| Plate angle (°) | 60 | 60 | 62 | 58 | 63 | 57 | 57 |
| Psa$_i$ of plate (in m$^2$) | 0.41 | 0.72 | 1.06 | 1.53 | 2.84 | 4.90 | 6.54 |
| Maximum number of plates in single settler | 6 | 10 | 13 | 15 | 20 | 22 | 27 |

(continued)

| | | | | | | | |
|---|---|---|---|---|---|---|---|
| PSA per settler (in m$^2$) | 2.4 | 7.2 | 13.7 | 23.0 | 56.7 | 108 | 176 |
| PSA/A per settler (= PSAR per settler) | 1.6 | 2.3 | 2.8 | 3.2 | 4.5 | 5.5 | 6.2 |
| | | | | | | | |
| Minimum PSAR required: 2.8 + 0.17A | 3.1 | 3.3 | 3.6 | 4.0 | 4.9 | 6.1 | 7.6 |
| number of settlers required to reach minimum PSAR | 1.9 | 1.5 | 1.3 | 1.2 | 1.1 | 1.1 | 1.2 |

From this table it is clear that in order to realise the minimum PSAR a stack of at least two inclined plate settlers is required.

In accordance with a particularly preferred embodiment, the bioreactor employed in accordance with the present invention is a granular sludge bed (GSB) reactor. In a typical GSB reactor, wastewater is introduced into the lower part of a bioreactor and flows upwards through a granular sludge bed that comprises the microorganisms which breakdown organic substrate that is present in the wastewater, whereby biogas is formed.

The present process can suitably be used to microbiologically treat different types of aqueous liquid comprising biodegradable substrate. Preferably, the of aqueous liquid comprising biodegradable substrate is wastewater. Examples of wastewaters that may suitably be treated are wastewater from the production of dairy food products or dairy ingredients (e.g. cheese), pulp and paper, agricultural products (e.g. sugar, starch, vegetable oils), fermented beverages (e.g. wine, beer), biofuel, petrochemical products or chemicals.

In the present process the aqueous liquid comprising biodegradable substrate is preferably processed at a flow rate of at least 10 m$^3$/hr, more preferably at a flow rate of 20-1000 m$^3$/hr.

The aqueous liquid comprising biodegradable substrate preferably contains at least 90 wt.%, more preferably at least 95 wt.% and most preferably at least 98 wt.% water.

The total organic substance content of the aqueous liquid comprising biodegradable substrate preferably exceeds 0.1 g COD/L, more preferably it is in the range of 0.5-100 g COD/L, most preferably in the range of 1.5-25 g COD/L.

The biomass that is present in the bioreactor comprises active micro-organisms that are capable of converting at least a part of the biodegradable substrate into biogas. Examples of micro-organisms that may be employed include bacteria and archaea. Preferably, the micro-organisms employed are anaerobic micro-organisms. According to a particularly preferred embodiment, the biomass comprises one or more species of methanogenic bacteria or methanogenic archaea.

According to a further preferred embodiment, the active micro-organisms employed in the present process grow in aggregates, often referred to as "granular biomass".

The bioreactor that is employed in the present process is preferably operated under anaerobic conditions. Preferably, the average redox potential of the fluid that is contained in the bioreactor is not below -200 mV, more preferably it is not below -300 mV. The "redox potential" can suitably be determined by a redox electrode as described in "2580 Oxidation-Reduction Potential (ORP), Standard Methods For the Examination of Water and Waste water (published online: August 27, 2018, revised: July 19, 2021)

The fluid in the bioreactor is preferably maintained at a temperature in the range of 10 to 40 °C, more preferably of 20 to 39 °C.

The pH of the fluid in the bioreactor is preferably maintained within the range of 6 to 8, more preferably of 6.8 to 7.5.

In a preferred embodiment, biogas is produced in the bioreactor at a rate of at least 80 L/hr per m$^3$ of fluid that is contained in the bioreactor. More preferably, biogas is produced in the bioreactor at a rate of at least 80-1250 L/hr per m$^3$ of fluid that is contained in the bioreactor.

The biogas that is produced in the present process preferably contains at least 50 wt.%, more preferably at least 65 wt.% methane.

In accordance with a particularly preferred embodiment, the bioreactor does not comprise a solid-liquid separator. Not having any solid-liquid separators in the bioreactor offers the advantage that these separators may be cleaned without having to remove the biomass from bioreactor.

The biomass separator that is employed in the present process may be located outside the bioreactor or it may be located inside the bioreactor as a separate unit. Preferably, the biomass separator is located outside the bioreactor.

In the present process the biomass separator is preferably operated under anaerobic conditions. Preferably, the average redox potential of the fluid that is contained in the biomass separator is less than -200 mV, more preferably it is less than -300 mV.

According to a particularly preferred embodiment, the volume of the biomass separator is substantially smaller than the volume of the bioreactor. Preferably, the volume of the biomass separator is at least 3 times smaller, more preferably 4 to 25 times smaller and most preferably 5 to 15 times smaller than the volume of the bioreactor.

According to another preferred embodiment, the footprint area of the biomass separator is substantially smaller than the footprint area of the bioreactor. Preferably, the footprint area of the biomass separator is at least 3 times smaller, more preferably 4-25 times smaller and most preferably 5 to 15 times smaller than the footprint area of the bioreactor.

The biomass separator of the present invention is a vertically elongated device. Typically, the biomass separator has a height : footprint area ratio of more than 1 $m^{-1}$, more preferably of 2 to 30 $m^{-1}$ and most preferably of 2 to 12 $m^{-1}$.

Preferably, at least a part of the liquid phase having a reduced biomass content is not recirculated to either the bioreactor or the biomass separator. More preferably, none of the liquid phase having a reduced biomass content is recirculated to either the bioreactor or the biomass separator.

In one embodiment of the invention the inclined plate elements of the one or more inclined plate settlers consist of rectangular plates. The projected surface area of each plate i ($psa_i$) can be calculated as follows:

$$psa_i = l_i \times w_i \times \cos(\Theta_i)$$

wherein

$l_i$ represents the length of inclined plate I in m;
$w_i$ represents the width of inclined plate I in m;
$\Theta_i$ represents the pitch of inclined plate i.

The separation efficiency of inclined plate settlers comprising rectangular plates increases with the length of the plates, be it that virtually no efficiency gains are realised when the length of the plates exceeds 3 m. Accordingly, the length ($l_i$) of the inclined plates preferably is in the range of 0.4 to 3 m, more preferably 0.6 to 2.5 m and most preferably 0.8 to 2 m.

The width ($w_i$) of the inclined plates preferably is in the range of 0.3 to 7 m, more preferably 0.6 to 6 m and most preferably 1 to 5 m.

The pitch ($\Theta_i$) of the inclined plates preferably is in the range of 30 to 80°, more preferably in the range of 40 to 70° and most preferably 45 to 65°.

In another embodiment of the present invention the inclined plate elements of the one or more inclined plate settlers consist of tapered tubes in the form open-top cones that are stacked on top of each other. The distance between the outer and inner rim of the cones is preferably in the range of 0.3 to 7 m, more preferably in the range of 0.6 to 6 m and most preferably in the range of 1 to 5 m.

The half-angle of the cone (the angle of the cone surface with the cone axis) preferably is in the range of 30 to 80°, more preferably in the range of 40 to 70° and most preferably 45 to 65°.

In yet another embodiment of the invention the inclined plate elements in the one or more inclined plate settlers form spiral-shaped channels. According to a preferred embodiment, this type of inclined plate settler comprises:

- at least two concentric enclosures including an outermost enclosure and an innermost enclosure and defining at least one concentric cavity;
- one or more spiral-shaped channels formed in the at least one concentric cavity;
- a fluid inlet for receiving fluid, located in the lower part of the one or more spiral-shaped channels;
- a solids outlet, for discharging solids comprised in the fluid, located in a lower part of the separation device; and
- a liquid outlet, for discharging liquid comprised in the fluid, located in the upper part of the one or more spiral shaped channels.

The total projected surface area of inclined plate settlers comprising spiral-shaped channels is calculated as follows:

$$PSA = \sum_{i=1}^{n} psa_i$$

$psa_i$ representing the aggregate projected surface area of a single channel.

The average space between the inclined plate elements of the inclined plate settler preferably is in the range of 2 to 18 cm, more preferably of 4 to 14 cm, most preferably of 8 to 12 cm.

The footprint area of the biomass separator typically is in the range of 1 to 22 $m^2$, more preferably 1.5 to 15 $m^2$.

In order to achieve effective separation in the biomass separator, space must be available around the one or more inclined plate settlers to allow for sufficient, preferably non-turbulent, downward flow. Preferably, in the part of the biomass separator where the one or more inclined plate settlers are located, 20-60% of the cross-sectional surface area is available for downward flow.

The total projected surface area ratio (PSAR) provided by the one or more inclined plate settlers preferably meets the following condition: PSAR ≥ 3.2 + 0.17A.

More preferably, PSAR meets the following condition: PSAR ≥ 3.5 + 0.17A.

Most preferably, the PSAR meets the following condition: 4 + 0.17A ≤ PSAR ≤ 25+ 0.17A.

The one or more inclined plate settlers that are employed in accordance with the present invention each preferably comprise at least 4, more preferably at least 5 and most preferably 6 to 30 inclined plate elements.

The biomass separator that is employed in the present process preferably contains two or more inclined plate settlers that are stacked on top of each other. The use of stacked settlers offers the advantage that the volume of the biomass separator can be utilised efficiently and that the separator can accommodate a high projected inclined plate surface area per $m^2$ of footprint. Accordingly, in a preferred embodiment, the biomass separator contains at least 2, more preferably 2 to 15 and most preferably 3 to 5 stacked inclined plate settlers.

In case the biomass separator contains two or more inclined plate settlers, the liquid phases having a reduced biomass content that are removed from each of the settlers may suitably be combined into a single stream. This may take place inside or outside the biomass separator.

The fluid phase enriched in biomass is preferably collected near the bottom of the biomass separator.

In an advantageous embodiment of the invention the aqueous liquid comprising biodegradable substrate is introduced directly into the bioreactor. Preferably, said aqueous liquid is introduced into the lower part of the bioreactor. By introducing the aqueous liquid comprising biodegradable substrate into the lower part of the bioreactor an upward flow through the biomass sludge of the bioreactor is created, thereby maximising biomass/substrate contact. Bioreactor performance is strongly dependent on the efficient distribution of the influent stream of aqueous liquid comprising biodegradable substrate. Consequently, in a preferred embodiment, upon introduction of the aqueous liquid comprising biodegradable substrate said aqueous liquid is evenly distributed beneath the biomass sludge.

In another advantageous embodiment, the present process comprises introducing a mixture of the aqueous liquid comprising biodegradable substrate and at least a part of a fluid phase enriched in biomass that is generated by the one or more inclined plate settlers into the bioreactor, wherein the mixture is produced by introducing the aqueous liquid comprising biodegradable substrate into the lower part of the biomass separator and mixing said aqueous liquid with at least a part of a fluid phase enriched in biomass. As will be explained below, introduction of the aqueous liquid into the lower part of the biomass separator offers the advantage that the biomass separator can additionally function as a conditioning tank.

According to a particularly preferred embodiment, the biomass separator that is employed in this embodiment of the invention comprises a conditioning chamber that is located underneath the one or more inclined plate biomass separators. The aqueous liquid comprising biodegradable substrate is introduced into said conditioning chamber where it is mixed with the fluid phase enriched in biomass, following which the mixture of aqueous liquid and fluid phase is transferred to the bioreactor. Fluctuations in the inflow of the aqueous liquid comprising biodegradable substrate into the bioreactor and undesired fluctuations in the quality of the fluid stream that is treated in the bioreactor can be minimised by employing such a conditioning chamber. Furthermore, also the risk that the conduit connecting the lower end of the biomass separator with the bioreactor will become clogged is substantially reduced by the present of a conditioning chamber underneath the one or more inclined plate settlers in the lower end of the biomass separator.

The mixture of aqueous liquid and fluid phase is preferably transferred from the conditioning chamber to the lower part of the bioreactor. By introducing the mixture into the lower part of the bioreactor an upward flow through the biomass sludge of the bioreactor is created. As already mentioned above, bioreactor performance is strongly dependent on the efficient distribution of the influent stream comprising biodegradable substrate. Consequently, in a preferred embodiment, upon introduction of the mixture of aqueous liquid and fluid phase, said mixture is evenly distributed beneath the biomass sludge.

Preferably, the volume of the conditioning chamber represents 5-25% more preferably 10-15 % of the total volume of the biomass separator.

In another advantageous embodiment, the present process comprises introducing a mixture of the aqueous liquid comprising biodegradable substrate and at least a part of a fluid phase enriched in biomass that is generated by the one or more inclined plate settlers into the bioreactor, wherein the mixture is produced by introducing both the aqueous liquid comprising biodegradable substrate and the at least part of a fluid phase into a mixing unit and mixing said aqueous liquid with at least a part of a fluid phase enriched in biomass, following which the mixture of aqueous liquid and fluid phase is transferred to the bioreactor, preferably to the lower part of the bioreactor. By introducing the mixture into the lower part of the bioreactor an upward flow through the biomass sludge of the bioreactor is created. In a preferred embodiment, upon introduction of the mixture of aqueous liquid and fluid phase, said mixture is evenly distributed beneath the biomass sludge.

The mixing unit that is employed in accordance with this embodiment may take the form of a simple tube, a static mixer, a mixing chamber or a mixing vessel.

According to a particularly preferred embodiment of the present process, the highest outlet of the one or more inclined plate settlers is located at 20-90%, more preferably 40-85% and most preferably 60-80% of the height of the fluid column within the biomass separator.

In a further preferred embodiment of the present process, the lowest inlet of the one or more inclined plate settlers is located at 1-67%, more preferably 2-25% and most preferably 2.5-20% of the height of the fluid column within the biomass separator.

The distance between the highest outlet of the one or more inclined plate settlers and the lowest inlet of the one or more inclined plate settlers preferably is in the range of 10 to 85%, more preferably in the range of 15 to 70%, most preferably in the range of 25 to 55% of the height of the fluid column within the biomass separator.

According to a preferred embodiment, the biomass separator is operated at a flow velocity of at least 22 $m^3$/hour/$m^2$, more preferably at a flow velocity of at least 33 $m^3$/hour/$m^2$ and most preferably at a flow velocity of 44-440 $m^3$/hour/$m^2$. Here the flow velocity is calculated by dividing the flow rate of the treated fluid through the biomass separator by the footprint area of the biomass separator.

According to a particularly preferred embodiment, the biomass separator is operated to generate the liquid having a reduced biomass content at a flow velocity of at least 20 $m^3$/hour/$m^2$, more preferably at a flow velocity of at least 30 $m^3$/hour/$m^2$ and most preferably at a flow velocity of 40-200 $m^3$/hour/$m^2$. Here the flow velocity is calculated by dividing the flow rate of the liquid having a reduced biomass content through the biomass separator by the footprint area of the biomass separator.

The bioreactor and the biomass separator are preferably operated with fluid levels that are very similar. Preferably, the fluid levels in the bioreactor and biomass separator differ by not more than 5%, more preferably by not more than 1%. Here "fluid level" refers to the absolute height of the fluid column.

The bioreactor and the biomass separator preferably rest on the same horizontal surface. Consequently, the height of the fluid column in the bioreactor and the height of the fluid column in the biomass separator preferably differ by no more than 5%, more preferably by no more than 1%.

Typically, the height of the fluid column in the bioreactor is in the range of 5 to 28 m, more preferably of 10 to 24 m.

In the present process microbial conversion of the biodegradable substrate is typically accompanied by microbial growth and increase in biomass. In order to maintain constant conditions in the bioreactor it is preferred remove biomass at a rate that is comparable to the rate at which extra biomass is produced within the bioreactor. Accordingly, in a preferred embodiment part of the fluid phase enriched in biomass that is obtained from the separation units is returned to the bioreactor and the other part is discarded.

In the present process produced biogas rises to the top of the bioreactor and is released from the fluid into a headspace of the reactor.

The treated fluid that is transferred to the biomass separator typically also contains some biogas. In a preferred embodiment, the downward flow velocity in the biomass separator is sufficiently low to allow biogas to rise to the top of the biomass separator. By using the upper part of the biomass separator as a gas/liquid separator, loss of biogas via the effluent stream of liquid phase having a reduced biomass content is effectively minimised. This way it is also avoided that biogas disturbs the biomass separation in the one or more inclined plate settlers.

Separation of biogas in the upper part of the bioreactor and/or the upper part of the biomass separator may be aided by a gas-liquid separator, installed below the fluid surface in the upper part of the bioreactor and/or the upper part of the biomass separator (above the one or more inclined plate settlers). Preferably, gas-liquid separation is achieved without the use of gas-liquid separator.

If one or more gas-liquid separators are employed to separate biogas, these one or more separators are preferably installed in the biomass separator and not in the bioreactor. Thus, these separators may be cleaned without having to remove the biomass from bioreactor. Examples of gas-liquid separators that may be employed include inclined plate settlers and cyclones.

In another advantageous embodiment of the present invention both the bioreactor and the biomass separator comprise a headspace that is filled with biogas and the headspace of the bioreactor and the headspace of the biomass separator are connected by a gas conduct, and the process comprises removing biogas from the headspace of the bioreactor or from the headspace of the biomass separator.

As explained herein before, in order to achieve maximum separation efficiency in the biomass separator it is advantageous to create a tangential downward flow in the upper part of the biomass separator. This may be achieved, for instance, by employing a biomass separator in the form of a standing cylinder, and by horizontally introducing the treated fluid into the upper part of the biomass separator at an angle of less than 20°, more preferably at an angle of less than 10° relative to the inside wall of the separator.

The installation that is employed in the present process may comprise more than one bioreactor and/or more than one biomass separator.

In an embodiment of the invention, the installation comprises one bioreactor that is connected to two or more biomass separators. In this arrangement, treated fluid is transferred from the upper part of the bioreactor to the upper parts of the two or more biomass separators and a stream comprising fluid phase enriched in biomass is transferred from the one or more biomass separators to the bioreactor. PSAR for this arrangement is calculated by first calculating the total projected surface area of the combination of separators and dividing it by the combined footprint area of the two or more biomass separators. The flow velocity at which the combination of two or more biomass separators is operated is calculated by dividing the combined flow rate through the two or more biomass separators by the total footprint area of the two or more biomass separators.

In another embodiment, the installation comprises two or more bioreactors that are connected a single biomass separator. In this arrangement, treated fluid is transferred from the upper parts of the two or more bioreactors to the upper part of the single biomass separator and a stream comprising fluid phase enriched in biomass is transferred from the biomass separator to the two or more bioreactors.

Preferably, the present process is operated in an installation as described below.

Another aspect of the present invention relates to an installation for microbiologically treating an aqueous liquid comprising a biodegradable substrate, as defined in the claims.

Preferred embodiments of the installation according to the invention have already been described above.

According to a particularly preferred embodiment, the bioreactor of the present installation is a granular sludge bed (GSB) reactor.

The biomass separator is preferably located adjacent the bioreactor.

Preferably, the bioreactor and the biomass separator are mounted onto the same horizontal surface.

Preferably the height of the bioreactor and biomass separator differ by no more than 20%, more preferably by not more than 10%.

According to a preferred embodiment, the bioreactor comprises an influent distribution system (22) near the bottom of the bioreactor that is fluently connected to the inlet (3) or inlet (4), which influent distribution system evenly distributes the stream comprising biodegradable substrate across the bottom end of the bioreactor.

The bioreactor and/or the biomass separator may comprise one or more gas-liquid separators located in the upper end of the bioreactor or separator. The one or more gas-liquid separators are preferably located in the upper end of the separator. Preferably, no gas-liquid separators are provided in the bioreactor.

Most preferably, neither the bioreactor nor the biomass separator employ a gas-liquid separator to achieve gas-liquid separation, i.e. the biogas is separated by allowing it to escape in the upper end of the bioreactor and the upper end of the biomass separator.

The gas-liquid separators are preferably selected from inclined plate settlers, cyclones and combinations thereof.

Preferably, the upper end of the bioreactor and the upper end of the biomass separator are connected by a conduit that fluidly connects a gas connection (15) located in the upper end of the bioreactor with a gas connection (16) located in the upper end of the biomass separator. The gas connection (15) is located above the outlet for treated fluid (5) and gas connection (16) is located above the inlet for treated fluid (6). This arrangement offers the advantages that both the bioreactor and the biomass separator operate at the same headspace pressure, and that a single outlet for further processing of the biogas suffices.

In a further preferred embodiment, the biomass separator comprises a conditioning chamber (18) that is located underneath the one or more inclined plate biomass separators, which conditioning chamber comprise an inlet (3) for aqueous liquid comprising a biodegradable substrate and an outlet (4) for a stream comprising fluid phase enriched in biomass. The stream comprising fluid phase enriched in biomass is produced within the conditioning chamber by mixing the aqueous liquid with fluid phase enriched in biomass.

In an alternative embodiment, the installation comprises a mixing unit (19) that comprises an inlet (3) for aqueous liquid comprising biodegradable substrate, an inlet (20) for fluid phase enriched in biomass that is fluidly connected to outlet (9) of the biomass separator and an outlet (21) that is fluidly connected to inlet (4) of the bioreactor.

## BRIEF DESCRIPTION OF THE DRAWINGS

Figure 1 schematically depicts an installation for microbiological treatment that can be used to operate the process according to the present invention

Figure 2 schematically depicts an alternative installation for microbiological treatment that can be used to operate the process according to the present invention

Figure 3 schematically depicts yet another alternative installation for microbiological treatment that can be used to operate the process according to the present invention

Figure 4 schematically depicts a horizontal cross-section of the upper part of the biomass separator

**DESCRIPTION OF EMBODIMENTS**

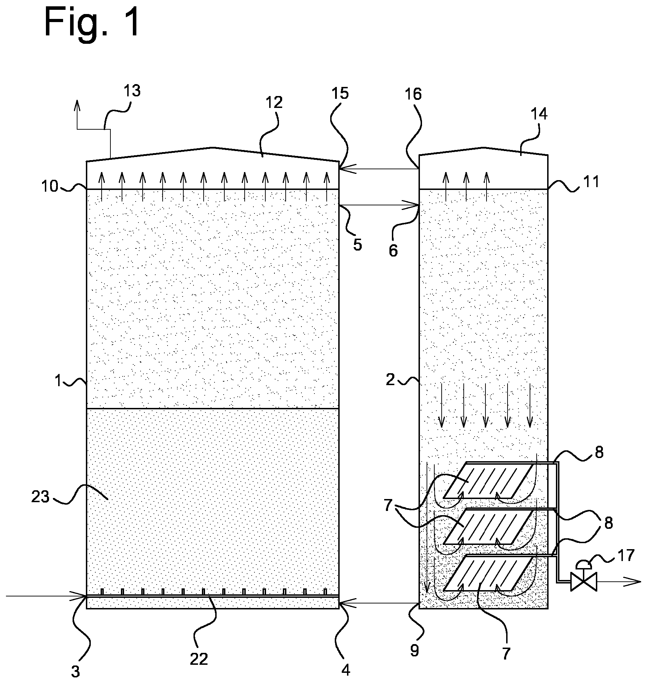

Figure 1 schematically depicts an installation for use in the process according to the invention. The installation comprises a bioreactor (1) and a biomass separator (2).

Aqueous liquid comprising biodegradable substrate is introduced into the lower part (3) of the bioreactor through an influent distribution system (22). The incoming fluid flows upwards through the bioreactor and through the granular biomass bed (23) wherein at least part of the biodegradable substrate is converted into biogas by the anaerobic microorganisms ("biomass"). The biogas naturally rises to the top of the bioreactor. A large fraction of the biogas is separated from the fluid at the bioreactor liquid surface (10) and is collected in the reactor headspace (12). From the headspace it is directed out of the bioreactor via biogas collection piping (13), this collection piping may instead also be connected to the headspace of the biomass separator. The treated liquid (low in biodegradable substrate concentration) flows through one or more outlets (5) from the top of the bioreactor, to one or more inlets (6) in the top of the biomass separator.

In the top of the biomass separator, further/final degassing takes place at the liquid surface (11). Biogas in the headspace of the biomass separator can flow via biogas outlet (16) and biogas inlet (15) to the headspace of the bioreactor and leave the bioreactor via the biogas collection piping. The degassed fluid then flows downwards through the biomass separator. In at least the lower part of the biomass separator, one or more inclined plate settlers (7) are situated. From the downward fluid flow the inlet(s) of the inclined plate settler(s) are fed. In case of multiple inclined plate settler(s), these biomass separators are vertically stacked and are fed with a fluid flow at different heights. To ensure efficient separation in the inclined plate settlers, an even fluid flow distribution over multiple inclined plate settlers is required and the flow through the inclined plate settlers must not be too turbulent. The first can be achieved by designing the piping (8) that collects the fluid low in biomass such that the total flow rate is evenly distributed over the multiple inclined plate settlers. The second can be achieved by taking into account a minimum space between the outer casing of the biomass separator and the inclined plate settler(s), such that a high flow velocity can be achieved without causing much turbulence near the inlet to the separation device(s). The combined flow of fluid low in biomass that exits the biomass separator(s) is controlled by valve (17) to maintain a stable water level in biomass separator and bioreactor. The fluid flow rich in biomass flows further downwards towards the bottom of the biomass separator, as does the recycle flow that did not pass through the inclined plate settlers.

In the lower part of the biomass separator the combination of recycle flow and fluid flow rich in biomass are extracted via an outlet (9) of the biomass separator as fluid phase enriched in biomass and introduced into the bioreactor via an inlet (4). This can be done with a mechanical pump, or by creating a gas-lift to drive the flow from biomass separator to bioreactor. The combined recycle flow and fluid flow rich in biomass can also be introduced into the bioreactor together with the aqueous liquid comprising biodegradable substrate via inlet (3).

The fluid level in the biomass separator is similar to that in the bioreactor, with the fluid level in the bioreactor being higher during normal operation to allow gravity flow from bioreactor to biomass separator. The volume of the biomass separator is efficiently utilised by extending the settling area of the inclined plate settlers in the vertical direction. This can, for example, be done by stacking multiple inclined plate settlers on top of each other, or by extending the capacity of a single settler in the vertical direction, as for example described in CN2880214Y. By extending the area of settling in the vertical direction, the capacity for fluid treatment per square meter of footprint area of the biomass separator can easily be increased to 20 $m^3/m^2$/h or more, depending on how far the settling area is extended vertically. Taking into account that the one or more inclined plate settlers are placed inside the biomass separator casing, and that free space is needed around the inclined plate settler(s) to allow for fluid to flow past, the footprint area of the biomass separator will be larger than the footprint area of the inclined plate settlers.

In an embodiment of the present invention, the upper part of the biomass separator is utilised as an efficient degassing device. The upper part of the biomass separator can also provide additional volume that makes it possible to achieve a high recycle flow velocity without resulting in too much turbulence near the inlets of the one or more inclined plate settlers, located in the lower part of the biomass separator. Both the aforementioned purposes of the upper part of the biomass separator can be further optimised by introducing the fluid flow off-centre into the top of the biomass separator, thus creating a tangential flow pattern.

A high water level in the biomass separator is advantageous to the separation efficiency of the one or more inclined plate settlers. To ensure that the one or more inclined plate settlers benefit from separation under increased hydrostatic pressure, ideally the top end of the one or more inclined plate settlers is placed at least 5 meters below the water level in the biomass separator.

Maintenance of the biomass separator can easily be done, e.g. by closing the inlet for aqueous liquid comprising biodegradable substrate (3), returning the last of the biomass to the bioreactor and then stopping the recycle flow. Next, the biomass separator is isolated from the bioreactor by closing interconnecting fluid connections (4 & 9, 5 & 6) and gas connections (15 & 16). It is not necessary to wait until residual biogas production has stopped in the bioreactor, since this biogas can continue to be collected (13) from the headspace of the bioreactor (12). Next, maintenance/inspection/cleaning of the biomass separator can take place while the anaerobic biomass remains inside the bioreactor.

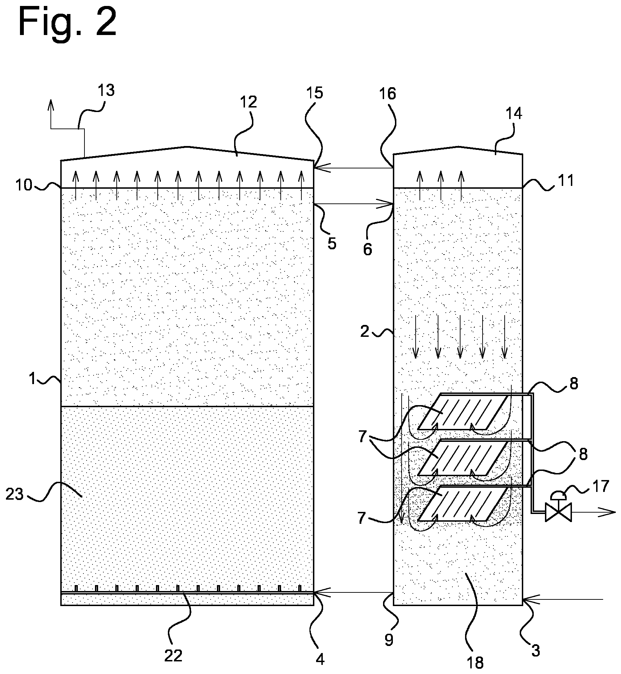

Figure 2 schematically depicts an alternative installation for use in the process according to the invention.

In this embodiment of the invention the lower end of the biomass separator functions as a so-called conditioning tank. Aqueous liquid comprising biodegradable substrate is introduced into conditioning chamber (18), located in the lower end of the biomass separator (2). The aqueous liquid comprising biodegradable substrate, fluid flow rich in biomass and recycle flow are mixed in the conditioning chamber and the mixed flow exits the biomass separator via outlet (9) and enters inlet (4) of the bioreactor. If needed, further conditioning of the mixed flow can be done by adding for example chemicals to adjust the pH or chemicals that serve as a supply of nutrients for the biomass in the bioreactor.

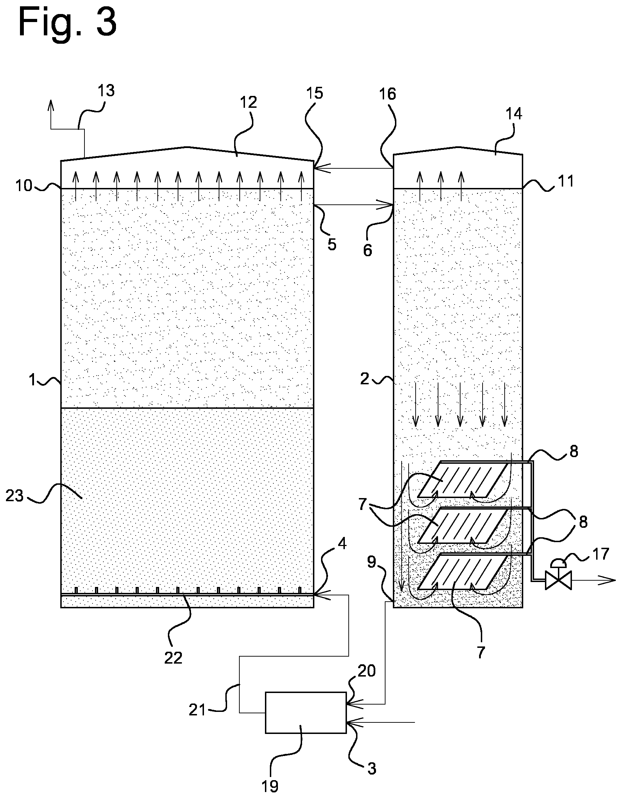

Figure 3 schematically depicts yet another alternative installation for use in the process according to the invention.

In this embodiment, the fluid phase enriched in biomass and the aqueous liquid comprising biodegradable substrate are mixed together before being introduced into the bioreactor through the influent distribution system. Aqueous liquid comprising biodegradable substrate is introduced via inlet (3) into mixing unit (19). Simultaneously, fluid phase enriched in biomass is transferred from outlet (9) of the biomass separator to inlet (20) of the mixing unit. If needed, chemicals (e.g. to adjust pH) or nutrients can also be introduced into the mixing unit. Subsequently the mixed flow is transferred from outlet (21) of the mixing unit to inlet (4) of the bioreactor.

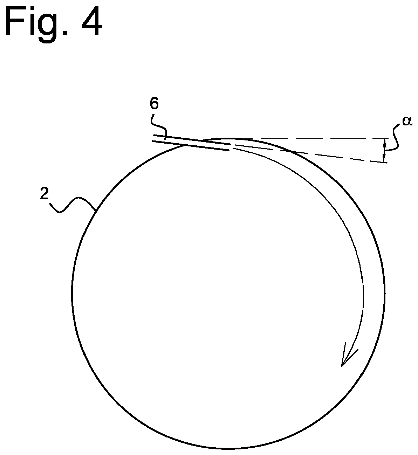

Figure 4 schematically depict a horizontal cross section of the upper part of the biomass separator (2). Treated fluid enters the biomass separator via inlet (6), which inlet introduces the treated fluid at an angle alpha relative to the inside wall of the separator, thereby creating a downwards spiralling flow.

## LIST OF REFERENCE SYMBOLS

| | |
|---|---|
| 1 | Bioreactor |
| 2 | Biomass separator |
| 3 | Inlet for aqueous liquid comprising a biodegradable substrate |
| 4 | Inlet for a stream comprising fluid phase enriched in biomass |
| 5 | Outlet for treated fluid |
| 6 | Inlet for a stream comprising treated liquid |
| 7 | Inclined plate settler |
| 8 | Outlet for liquid phase having reduced biomass content |
| 9 | Outlet for a stream comprising fluid phase enriched in biomass |
| 10 | Level of fluid in the bioreactor |
| 11 | Level of fluid in the biomass separator |
| 12 | Headspace of the bioreactor |
| 13 | Headspace of the biomass separator |
| 15 | Gas connection |
| 16 | Gas connection |
| 17 | Control valve |
| 18 | Conditioning chamber |
| 19 | Mixing unit |
| 20 | Inlet for fluid phase enriched in biomass |
| 21 | Outlet for a stream comprising fluid phase enriched in biomass |
| 22 | Influent distribution system |
| 23 | Granular biomass bed |

## Claims

1. A process of microbiologically treating an aqueous liquid comprising biodegradable substrate in an installation comprising (i) a bioreactor (1) containing a biomass sludge and (ii) a biomass separator (2) that is separated from the bioreactor and that comprises two or more inclined plate settlers (7) that are stacked on top of each other, said process comprising:

    • introducing the aqueous liquid comprising biodegradable substrate into the bioreactor;
    • transferring treated fluid that comprises biomass from the upper part of the bioreactor through an inlet (6) for a stream comprising treated liquid to the upper part of the biomass separator;
    • separating the treated fluid into a liquid phase having a reduced biomass content and a fluid phase enriched in biomass in the two or more inclined plate settlers, said two or more inclined plate settlers being located below the inlet for a stream comprising treated liquid;
• removing liquid phase having a reduced biomass content from the two or more inclined plate settlers; and
• transferring at least a part of the fluid phase enriched in biomass from the lower part of the biomass separator to the bioreactor;

wherein the biomass separator has a footprint area A of 0.5 to 30 m$^2$, said footprint area being equal to the horizontal surface area that is covered by the vertical projection of the biomass separator onto that horizontal surface area; and

wherein the two or more inclined plate settlers comprise a total number of n inclined plate elements which together provide a total projected surface area (PSA) and a total projected surface area ratio (PSAR) that are calculated as follows:

-

$$PSA = \sum_{i=1}^{n} psa_i$$

-

$$PSAR = PSA/A$$

$psa_i$ representing the aggregate projected surface area of inclined plate element i in m$^2$, said aggregate projected surface area being equal to the horizontal component of the surface area of the inclined plate element; and

wherein PSAR $\geq$ 2.8 + 0.17A;

or

• introducing a mixture of the aqueous liquid comprising biodegradable substrate and at least a part of a fluid phase enriched in biomass that is generated by the two or more inclined plate settlers into the bioreactor, wherein the mixture is produced

(i) by introducing the aqueous liquid comprising biodegradable substrate into the lower part of the biomass separator and mixing said aqueous liquid with at least a part of the fluid phase enriched in biomass or

(ii) by introducing both the aqueous liquid comprising biodegradable substrate and at least part of the fluid phase enriched in biomass into a mixing unit, mixing said aqueous liquid with at least a part of the fluid phase enriched in biomass and transferring the mixture of said aqueous liquid and the at least part of a fluid phase to the bioreactor;

• transferring treated fluid that comprises biomass from the upper part of the bioreactor through an inlet for a stream comprising treated liquid (6) to the upper part of the biomass separator;
• separating the treated fluid into a liquid phase having a reduced biomass content and a fluid phase enriched in biomass in the two or more inclined plate settlers, said two or more inclined plate settlers being located below the inlet for a stream comprising treated liquid;
• removing liquid phase having a reduced biomass content from the two or more inclined plate settlers;

wherein the biomass separator has a footprint area A of 0.5 to 30 m$^2$, said footprint area being equal to the horizontal surface area that is covered by the vertical projection of the biomass separator onto that horizontal surface area; and

wherein the two or more inclined plate settlers comprise a total number of n inclined plate elements which together provide a total projected surface area (PSA) and a total projected surface area ratio (PSAR) that are calculated as follows:

-

$$PSA = \sum_{i=1}^{n} psa_i$$

-

$$PSAR = PSA/A$$

$psa_i$ representing the aggregate projected surface area of inclined plate element i in $m^2$, said aggregate projected surface area being equal to the horizontal component of the surface area of the inclined plate element; and

wherein $PSAR \geq 2.8 + 0.17A$.

2. Process according to claim 1, wherein the biomass separator is operated to generate the liquid phase having a reduced biomass content at a flow velocity of at least 20 $m^3$/hour/$m^2$, the flow velocity being calculated by dividing the flow rate of the liquid phase having a reduced biomass content by the footprint area of the biomass separator.

3. Process according to claim 1 or 2, wherein the volume of the biomass separator is at least 5 times smaller than the volume of the bioreactor.

4. Process according to any one of the preceding claims, wherein the height of the fluid column in the bioreactor and the height of the fluid column in the biomass separator differ by not more than 5%.

5. Process according to any one of the preceding claims, wherein the biomass separator has a height : footprint area ratio of more than 1 $m^{-1}$.

6. Process according to any one of the preceding claims, wherein the inclined plate elements of the two or more inclined plate settlers consist of rectangular plates and wherein $psa_i$ is calculated as follows:

$$psa_i = l_i \times w_i \times \cos(\Theta_i)$$

wherein

$l_i$ represents the length of inclined plate l in m;
$w_i$ represents the width of inclined plate l in m;
$\Theta_i$ represents the pitch of inclined plate i.

7. Process according to any one of claims 1-5, wherein the inclined plate elements of the two or more inclined plate settlers consist of open-top cones that are stacked onto each other.

8. Process according to any one of claims 1-5, wherein the inclined plate elements in the two or more inclined plate settlers comprise:

• at least two concentric enclosures including an outermost enclosure and an innermost enclosure and defining at least one concentric cavity;
• one or more spiral-shaped channels formed in the at least one concentric cavity;
• a fluid inlet for receiving fluid, located in the lower part of the one or more spiral-shaped channels;
• a solids outlet, for discharging solids comprised in the fluid, located in a lower part of the separation device; and
• a liquid outlet, for discharging liquid comprised in the fluid, located in the upper part of the one or more spiral shaped channels.

9. Process according to any one of the preceding claims, wherein the aqueous liquid comprising biodegradable substrate is introduced into the lower part of the bioreactor.

10. Process according to any one of claims 1-8, wherein the biomass separator comprises a conditioning chamber that is located underneath the two or more inclined plate settlers, wherein the aqueous liquid comprising biodegradable substrate is introduced into said conditioning chamber where it is mixed with the fluid phase enriched in biomass, following which the mixture of aqueous liquid and fluid phase is transferred to the lower part of the bioreactor.

11. Process according to any one of the preceding claims, wherein part of the fluid phase enriched in biomass that is obtained from the separation units is returned to the bioreactor and another part is discarded.

12. Process according to any one of the preceding claims, wherein both the bioreactor and the biomass separator comprise a headspace that is filled with biogas, wherein the headspace of the bioreactor and the headspace of the biomass separator are connected by a gas conduct, and wherein the process comprises removing biogas from the headspace of the bioreactor or from the headspace of the biomass separator.

13. Process according to any one of the preceding claims, wherein a tangential downward flow is realised in the upper part of the biomass separator.

14. Process according to any one of the preceding claims, wherein the bioreactor and the biomass separator are operated under anaerobic conditions.

15. An installation for microbiologically treating an aqueous liquid comprising a biodegradable substrate, wherein the installation comprises:

- • a bioreactor (1) comprising:

    - an inlet (4) for a stream comprising fluid phase enriched in biomass; and
    - an outlet (5) for treated liquid, located in the upper part of the bioreactor;

- • a biomass separator (2) that is separated from the bioreactor, comprising:

    - an inlet (6) for a stream comprising treated liquid located in the upper part of the biomass separator, said inlet for treated liquid being fluidly connected to outlet (5) of the bioreactor,
    - two or more inclined plate settlers (7) that are stacked on top of each other, located below inlet (6), each inclined plate settler having an outlet (8) for liquid phase having a reduced biomass content;
    - an outlet (9) for fluid enriched in biomass located in the lower part of the biomass separator underneath the two or more inclined plate settlers, said outlet (9) being fluidly connected to inlet (4) of the bioreactor;
    wherein the bioreactor comprises an inlet (3) for an aqueous liquid comprising a biodegradable substrate; and
    wherein the biomass separator has a footprint area A of 0.5 to 30 $m^2$, said footprint area being equal to the horizontal surface area that is covered by the vertical projection of the biomass separator onto that horizontal surface area; and
    wherein the two or more inclined plate settlers comprise a total number of n inclined plate elements which together provide a total projected surface area (PSA) and a total projected surface area ratio (PSAR) that are calculated as follows:

    -

$$PSA = \sum_{i=1}^{n} psa_i$$

    -

$$PSAR = PSA/A$$

    $psa_i$ representing the aggregate projected surface area of inclined plate element i in $m^2$, said aggregate projected surface area being equal to the horizontal component of the surface area of the inclined plate element; and
    wherein PSAR $\geq$ 2.8 + 0.17A;
    or

- • a bioreactor (1) comprising:

    - an inlet (4) for a stream comprising fluid phase enriched in biomass; and
    - an outlet (5) for treated liquid, located in the upper part of the bioreactor;

- • a biomass separator (2) that is separated from the bioreactor, comprising:

- an inlet (6) for a stream comprising treated liquid located in the upper part of the biomass separator, said inlet for treated liquid being fluidly connected to outlet (5) of the bioreactor,
- two or more inclined plate settlers (7) that are stacked on top of each other, located below inlet (6), each inclined plate settler having an outlet (8) for liquid phase having a reduced biomass content;
- an outlet (9) for fluid enriched in biomass located in the lower part of the biomass separator underneath the two or more inclined plate settlers, said outlet (9) being fluidly connected to inlet (4) of the bioreactor;
wherein the lower part of the biomass separator comprises an inlet (3) for an aqueous liquid comprising a biodegradable substrate; and
wherein the biomass separator has a footprint area A of 0.5 to 30 $m^2$, said footprint area being equal to the horizontal surface area that is covered by the vertical projection of the biomass separator onto that horizontal surface area; and
wherein the two or more inclined plate settlers comprise a total number of n inclined plate elements which together provide a total projected surface area (PSA) and a total projected surface area ratio (PSAR) that are calculated as follows:

-

$$PSA = \sum_{i=1}^{n} psa_i$$

-

$$PSAR = PSA/A$$

$psa_i$ representing the aggregate projected surface area of inclined plate element i in $m^2$, said aggregate projected surface area being equal to the horizontal component of the surface area of the inclined plate element; and
wherein PSAR $\geq$ 2.8 + 0.17A;
or

• a bioreactor (1) comprising:

- an inlet (4) for a stream comprising fluid phase enriched in biomass; and
- an outlet (5) for treated liquid, located in the upper part of the bioreactor;

• a biomass separator (2) that is separated from the bioreactor, comprising:

- an inlet (6) for a stream comprising treated liquid located in the upper part of the biomass separator, said inlet for treated liquid being fluidly connected to outlet (5) of the bioreactor,
- two or more inclined plate settlers (7) that are stacked on top of each other, located below inlet (6), each inclined plate settler having an outlet (8) for liquid phase having a reduced biomass content;
- an outlet (9) for fluid enriched in biomass located in the lower part of the biomass separator underneath the two or more inclined plate settlers, said outlet (9) being fluidly connected to inlet (20) of a mixing unit (19), which mixing unit comprises an outlet (21) that is fluidly connected to inlet (4) of the bioreactor;
wherein the mixing unit comprises an inlet (3) for an aqueous liquid comprising a biodegradable substrate; and
wherein the biomass separator has a footprint area A of 0.5 to 30 $m^2$, said footprint area being equal to the horizontal surface area that is covered by the vertical projection of the biomass separator onto that horizontal surface area; and
wherein the two or more inclined plate settlers comprise a total number of n inclined plate elements which together provide a total projected surface area (PSA) and a total projected surface area ratio (PSAR) that are calculated as follows:

-

$$PSA = \sum_{i=1}^{n} psa_i$$

-

$$PSAR = PSA/A$$

psa$_i$ representing the aggregate projected surface area of inclined plate element i in m$^2$, said aggregate projected surface area being equal to the horizontal component of the surface area of the inclined plate element; and
wherein PSAR $\geq$ 2.8 + 0.17A.

**Patentansprüche**

1. Verfahren zur mikrobiologischen Behandlung einer wässrigen Flüssigkeit, die biologisch abbaubares Substrat enthält, in einer Installation, die (i) einen Bioreaktor (1), der einen Biomasseschlamm enthält, und (ii) einen Biomasse-Separator (2) umfasst, der von dem Bioreaktor getrennt ist und der zwei oder mehr geneigte Plattensiedler (7) umfasst, die übereinander gestapelt sind, wobei das besagte Verfahren Folgendes umfasst:

   • Einleiten der wässrigen Flüssigkeit, die biologisch abbaubares Substrat enthält, in den Bioreaktor;
   • Überführen des behandelten Fluids, das Biomasse enthält, aus dem oberen Teil des Bioreaktors durch einen Einlass (6) für einen Strom, der behandelte Flüssigkeit enthält, in den oberen Teil des Biomasse-Separators;
   • Trennen des behandelten Fluids in eine Flüssigphase mit einem reduzierten Biomassegehalt und eine mit Biomasse angereicherte Fluidphase in den zwei oder mehr geneigten Plattensiedlern, wobei sich die besagten zwei oder mehr geneigten Plattensiedler unterhalb des Einlasses für einen Strom befinden, der behandelte Flüssigkeit enthält;
   • Entfernen der Flüssigphase mit einem reduzierten Biomassegehalt aus den zwei oder mehr geneigten Plattensiedlern; und
   • Überführen mindestens eines Teils der mit Biomasse angereicherten Fluidphase aus dem unteren Teil des Biomasse-Separators in den Bioreaktor;
   wobei der Biomasse-Separator eine Grundfläche A von 0,5 bis 30 m$^2$ aufweist, wobei die besagte Grundfläche der waagerechten Fläche entspricht, die von der senkrechten Projektion des Biomasse-Separators auf diese waagerechte Fläche bedeckt wird; und wobei die zwei oder mehr geneigten Plattensiedler eine Gesamtanzahl von n geneigten Plattenelementen umfassen, die zusammen eine projizierte Gesamtfläche (PSA) und ein projiziertes Gesamtflächenverhältnis (PSAR) bereitstellen, die wie folgt berechnet werden:

-

$$PSA = \sum_{i=1}^{n} psa_i$$

-

$$PSAR = PSA/A$$

wobei psa$_i$ die projizierte Gesamtfläche des geneigten Plattenelements i in m$^2$ darstellt, wobei die besagte projizierte Gesamtfläche der horizontalen Komponente der Fläche des geneigten Plattenelements entspricht; und
wobei PSAR $\geq$ 2,8 + 0,17A ist;
oder

   • Einleiten einer Mischung aus der wässrigen Flüssigkeit, die biologisch abbaubares Substrat enthält, und mindestens eines Teils einer mit Biomasse angereicherten Fluidphase, die von den zwei oder mehr geneigten Plattensiedlern erzeugt wird, in den Bioreaktor, wobei die Mischung durch Folgendes hergestellt wird:

      (i) durch Einleiten der wässrigen Flüssigkeit, die biologisch abbaubares Substrat enthält, in den unteren Teil des Biomasse-Separators und Mischen der besagten wässrigen Flüssigkeit mit mindestens einem Teil der mit Biomasse angereicherten Fluidphase oder

(ii) durch Einleiten sowohl der wässrigen Flüssigkeit, die biologisch abbaubares Substrat enthält, als auch mindestens eines Teils der mit Biomasse angereicherten Fluidphase in eine Mischeinheit, Mischen der besagten wässrigen Flüssigkeit mit mindestens einem Teil der mit Biomasse angereicherten Fluidphase und Überführen der Mischung aus der besagten wässrigen Flüssigkeit und dem mindestens einen Teil einer Fluidphase in den Bioreaktor;

• Überführen des behandelten Fluids, das Biomasse enthält, aus dem oberen Teil des Bioreaktors durch einen Einlass für einen Strom, der behandelte Flüssigkeit (6) enthält, in den oberen Teil des Biomasse-Separators;
• Trennen des behandelten Fluids in eine Flüssigphase mit einem reduzierten Biomassegehalt und eine mit Biomasse angereicherte Fluidphase in den zwei oder mehr geneigten Plattensiedlern, wobei sich die besagten zwei oder mehr geneigten Plattensiedler unterhalb des Einlasses für einen Strom befinden, der behandelte Flüssigkeit enthält;
• Entfernen der Flüssigphase mit einem reduzierten Biomassegehalt aus den zwei oder mehr geneigten Plattensiedlern;

wobei der Biomasse-Separator eine Grundfläche A von 0,5 bis 30 $m^2$ aufweist, wobei die besagte Grundfläche der waagerechten Fläche entspricht, die von der senkrechten Projektion des Biomasse-Separators auf diese waagerechte Fläche bedeckt wird; und

wobei die zwei oder mehr geneigten Plattensiedler eine Gesamtanzahl von n geneigten Plattenelementen umfassen, die zusammen eine projizierte Gesamtfläche (PSA) und ein projiziertes Gesamtflächenverhältnis (PSAR) bereitstellen, die wie folgt berechnet werden:

-

$$PSA = \sum_{i=1}^{n} psa_i$$

-

$$PSAR = PSA/A$$

wobei $psa_i$ die projizierte Gesamtfläche des geneigten Plattenelements i in $m^2$ darstellt, wobei die besagte projizierte Gesamtfläche der horizontalen Komponente der Fläche des geneigten Plattenelements entspricht; und

wobei $PSAR \geq 2,8 + 0,17A$ ist.

2. Verfahren nach Anspruch 1, wobei der Biomasse-Separator so betrieben wird, dass er die Flüssigphase mit einem reduzierten Biomassegehalt bei einer Strömungsgeschwindigkeit von mindestens 20 $m^3$/Stunde/$m^2$ erzeugt, wobei die Strömungsgeschwindigkeit durch Dividieren der Durchflussrate der Flüssigphase mit einem reduzierten Biomassegehalt durch die Grundfläche des Biomasse-Separators berechnet wird.

3. Verfahren nach Anspruch 1 oder 2, wobei das Volumen des Biomasse-Separators mindestens 5-mal kleiner als das Volumen des Bioreaktors ist.

4. Verfahren nach einem der vorhergehenden Ansprüche, wobei die Höhe der Fluidsäule in dem Bioreaktor und die Höhe der Fluidsäule in dem Biomasse-Separator um nicht mehr als 5 % voneinander abweichen.

5. Verfahren nach einem der vorhergehenden Ansprüche, wobei der Biomasse-Separator ein Verhältnis von Höhe : Grundfläche von mehr als 1 $m^{-1}$ aufweist.

6. Verfahren nach einem der vorhergehenden Ansprüche, wobei die geneigten Plattenelemente der zwei oder mehr geneigten Plattensiedler aus rechteckigen Platten bestehen und wobei $psa_i$ wie folgt berechnet wird:

$$psa_i = l_i \times w_i \times \cos(\Theta_i)$$

wobei

$l_i$ die Länge der geneigten Platte l in m darstellt;
$w_i$ die Breite der geneigten Platte l in m darstellt;
$\Theta_i$ die Neigung der geneigten Platte i darstellt.

7. Verfahren nach einem der Ansprüche 1-5, wobei die geneigten Plattenelemente der zwei oder mehr geneigten Plattensiedler aus oben offenen Kegeln bestehen, die übereinander gestapelt sind.

8. Verfahren nach einem der Ansprüche 1-5, wobei die geneigten Plattenelemente der zwei oder mehr geneigten Plattensiedler Folgendes umfassen:

• mindestens zwei konzentrische Umhüllungen, die eine äußerste Umhüllung und eine innerste Umhüllung enthalten und mindestens einen konzentrischen Hohlraum definieren;
• einen oder mehrere spiralförmige Kanäle, die in dem mindestens einen konzentrischen Hohlraum ausgebildet sind;
• einen Fluideinlass zum Aufnehmen von Fluid, der sich in dem unteren Teil des einen oder der mehreren spiralförmigen Kanäle befindet;
• einen Feststoffauslass zum Ablassen von in dem Fluid enthaltenen Feststoffen, der sich in einem unteren Teil der Trennvorrichtung befindet; und
• einen Flüssigkeitsauslass zum Ablassen von in dem Fluid enthaltener Flüssigkeit, der sich in dem oberen Teil des einen oder der mehreren spiralförmigen Kanäle befindet.

9. Verfahren nach einem der vorhergehenden Ansprüche, wobei die wässrige Flüssigkeit, die biologisch abbaubares Substrat enthält, in den unteren Teil des Bioreaktors eingeleitet wird.

10. Verfahren nach einem der Ansprüche 1-8, wobei der Biomasse-Separator eine Konditionierungskammer umfasst, die sich unterhalb der zwei oder mehr geneigten Plattensiedler befindet, wobei die wässrige Flüssigkeit, die biologisch abbaubares Substrat enthält, in die besagte Konditionierungskammer eingeleitet wird, wo sie mit der mit Biomasse angereicherten Fluidphase gemischt wird, woraufhin die Mischung aus wässriger Flüssigkeit und Fluidphase in den unteren Teil des Bioreaktors überführt wird.

11. Verfahren nach einem der vorhergehenden Ansprüche, wobei ein Teil der mit Biomasse angereicherten Fluidphase, die aus den Trenneinheiten erhalten wird, in den Bioreaktor zurückgeführt wird und ein anderer Teil verworfen wird.

12. Verfahren nach einem der vorhergehenden Ansprüche, wobei sowohl der Bioreaktor als auch der Biomasse-Separator einen mit Biogas gefüllten Kopfraum aufweisen, wobei der Kopfraum des Bioreaktors und der Kopfraum des Biomasse-Separators durch eine Gasleitung verbunden sind und wobei das Verfahren das Entfernen von Biogas aus dem Kopfraum des Bioreaktors oder aus dem Kopfraum des Biomasse-Separators umfasst.

13. Verfahren nach einem der vorhergehenden Ansprüche, wobei in dem oberen Teil des Biomasse-Separators eine tangentiale Abwärtsströmung realisiert wird.

14. Verfahren nach einem der vorhergehenden Ansprüche, wobei der Bioreaktor und der Biomasse-Separator unter anaeroben Bedingungen betrieben werden.

15. Installation zur mikrobiologischen Behandlung einer wässrigen Flüssigkeit, die ein biologisch abbaubares Substrat enthält, wobei die Installation Folgendes umfasst:

• einen Bioreaktor (1), der Folgendes umfasst:

- einen Einlass (4) für einen Strom, der eine mit Biomasse angereicherte Fluidphase enthält; und
- einen Auslass (5) für behandelte Flüssigkeit, der sich in dem oberen Teil des Bioreaktors befindet;

• einen Biomasse-Separator (2), der von dem Bioreaktor getrennt ist und Folgendes umfasst:

- einen Einlass (6) für einen Strom, der behandelte Flüssigkeit enthält, der sich in dem oberen Teil des Biomasse-Separators befindet, wobei der besagte Einlass für behandelte Flüssigkeit mit dem Auslass (5) des Bioreaktors fluidverbunden ist,
- zwei oder mehr geneigte Plattensiedler (7), die übereinander gestapelt sind, die sich unterhalb des Einlasses (6) befinden, wobei jeder geneigte Plattensiedler einen Auslass (8) für eine Flüssigphase mit einem reduzierten Biomassegehalt aufweist;

- einen Auslass (9) für mit Biomasse angereichertes Fluid, der sich in dem unteren Teil des Biomasse-Separators unterhalb der zwei oder mehr geneigten Plattensiedler befindet, wobei der besagte Auslass (9) mit dem Einlass (4) des Bioreaktors fluidverbunden ist;

wobei der Bioreaktor einen Einlass (3) für eine wässrige Flüssigkeit umfasst, die ein biologisch abbaubares Substrat enthält; und

wobei der Biomasse-Separator eine Grundfläche A von 0,5 bis 30 m$^2$ aufweist, wobei die besagte Grundfläche der waagerechten Fläche entspricht, die von der senkrechten Projektion des Biomasse-Separators auf diese waagerechte Fläche bedeckt wird; und wobei die zwei oder mehr geneigten Plattensiedler eine Gesamtanzahl von n geneigten Plattenelementen umfassen, die zusammen eine projizierte Gesamtfläche (PSA) und ein projiziertes Gesamtflächenverhältnis (PSAR) bereitstellen, die wie folgt berechnet werden:

-

$$PSA = \sum_{i=1}^{n} psa_i$$

-

$$PSAR = PSA/A$$

wobei $psa_i$ die projizierte Gesamtfläche des geneigten Plattenelements i in m$^2$ darstellt, wobei die besagte projizierte Gesamtfläche der horizontalen Komponente der Fläche des geneigten Plattenelements entspricht; und

wobei PSAR $\geq$ 2,8 + 0,17A ist;

oder

• einen Bioreaktor (1), der Folgendes umfasst:

- einen Einlass (4) für einen Strom, der eine mit Biomasse angereicherte Fluidphase enthält; und
- einen Auslass (5) für behandelte Flüssigkeit, der sich in dem oberen Teil des Bioreaktors befindet;

• einen Biomasse-Separator (2), der von dem Bioreaktor getrennt ist und Folgendes umfasst:

- einen Einlass (6) für einen Strom, der behandelte Flüssigkeit enthält, der sich in dem oberen Teil des Biomasse-Separators befindet, wobei der besagte Einlass für behandelte Flüssigkeit mit dem Auslass (5) des Bioreaktors fluidverbunden ist,
- zwei oder mehr geneigte Plattensiedler (7), die übereinander gestapelt sind, die sich unterhalb des Einlasses (6) befinden, wobei jeder geneigte Plattensiedler einen Auslass (8) für die Flüssigphase mit einem reduzierten Biomassegehalt aufweist;
- einen Auslass (9) für mit Biomasse angereichertes Fluid, der sich in dem unteren Teil des Biomasse-Separators unterhalb der zwei oder mehr geneigten Plattensiedler befindet, wobei der besagte Auslass (9) mit dem Einlass (4) des Bioreaktors fluidverbunden ist;

wobei der untere Teil des Biomasse-Separators einen Einlass (3) für eine wässrige Flüssigkeit umfasst, die ein biologisch abbaubares Substrat enthält; und

wobei der Biomasse-Separator eine Grundfläche A von 0,5 bis 30 m$^2$ aufweist, wobei die besagte Grundfläche der waagerechten Fläche entspricht, die von der senkrechten Projektion des Biomasse-Separators auf diese waagerechte Fläche bedeckt wird; und wobei die zwei oder mehr geneigten Plattensiedler eine Gesamtanzahl von n geneigten Plattenelementen umfassen, die zusammen eine projizierte Gesamtfläche (PSA) und ein projiziertes Gesamtflächenverhältnis (PSAR) bereitstellen, die wie folgt berechnet werden:

-

$$PSA = \sum_{i=1}^{n} psa_i$$

-

$$PSAR = PSA/A$$

wobei $psa_i$ die projizierte Gesamtfläche des geneigten Plattenelements i in m$^2$ darstellt,
wobei die besagte projizierte Gesamtfläche der horizontalen Komponente der Fläche des geneigten Plattenelements entspricht; und
wobei PSAR $\geq$ 2,8 + 0,17A ist;
oder

• einen Bioreaktor (1), der Folgendes umfasst:

- einen Einlass (4) für einen Strom, der eine mit Biomasse angereicherte Fluidphase enthält; und
- einen Auslass (5) für behandelte Flüssigkeit, der sich in dem oberen Teil des Bioreaktors befindet;

• einen Biomasse-Separator (2), der von dem Bioreaktor getrennt ist und Folgendes umfasst:

- einen Einlass (6) für einen Strom, der behandelte Flüssigkeit enthält, der sich in dem oberen Teil des Biomasse-Separators befindet, wobei der besagte Einlass für behandelte Flüssigkeit mit dem Auslass (5) des Bioreaktors fluidverbunden ist,
- zwei oder mehr geneigte Plattensiedler (7), die übereinander gestapelt sind und sich unterhalb des Einlasses (6) befinden, wobei jeder geneigte Plattensiedler einen Auslass (8) für die Flüssigphase mit einem reduzierten Biomassegehalt aufweist;
- einen Auslass (9) für mit Biomasse angereichertes Fluid, der sich in dem unteren Teil des Biomasse-Separators unterhalb der zwei oder mehr geneigten Plattensiedler befindet, wobei der besagte Auslass (9) mit dem Einlass (20) einer Mischeinheit (19) fluidverbunden ist, wobei die Mischeinheit einen Auslass (21) umfasst, der mit dem Einlass (4) des Bioreaktors fluidverbunden ist;
wobei die Mischeinheit einen Einlass (3) für eine wässrige Flüssigkeit umfasst, die ein biologisch abbaubares Substrat enthält; und
wobei der Biomasse-Separator eine Grundfläche A von 0,5 bis 30 m$^2$ aufweist, wobei die besagte Grundfläche der waagerechten Fläche entspricht, die von der senkrechten Projektion des Biomasse-Separators auf diese waagerechte Fläche bedeckt wird; und wobei die zwei oder mehr geneigten Plattensiedler eine Gesamtanzahl von n geneigten Plattenelementen umfassen, die zusammen eine projizierte Gesamtfläche (PSA) und ein projiziertes Gesamtflächenverhältnis (PSAR) bereitstellen, die wie folgt berechnet werden:

-

$$PSA = \sum_{i=1}^{n} psa_i$$

-

$$PSAR = PSA/A$$

wobei $psa_i$ die projizierte Gesamtfläche des geneigten Plattenelements i in m$^2$ darstellt,
wobei die besagte projizierte Gesamtfläche der horizontalen Komponente der Fläche des geneigten Plattenelements entspricht; und
wobei PSAR $\geq$ 2,8 + 0,17A ist.

## Revendications

1.  Procédé de traitement microbiologique d'un liquide aqueux comprenant un substrat biodégradable dans une installation comprenant (i) un bioréacteur (1) contenant des boues de biomasse et (ii) un séparateur de biomasse (2) qui est séparé du bioréacteur et qui comprend deux ou plusieurs décanteurs à plaques inclinées (7) qui sont empilés les uns sur les autres, ledit procédé comprenant :

    • introduire le liquide aqueux comprenant un substrat biodégradable dans le bioréacteur ;
    • transférer du fluide traité qui comprend de la biomasse depuis la partie supérieure du bioréacteur à travers une entrée (6) pour un flux comprenant du liquide traité vers la partie supérieure du séparateur de biomasse ;
• séparer le fluide traité en une phase liquide ayant une teneur réduite en biomasse et une phase fluide enrichie en biomasse dans les deux ou plusieurs décanteurs à plaques inclinées, lesdits deux ou plusieurs décanteurs à plaques inclinées étant situés en dessous de l'entrée pour un flux comprenant du liquide traité ;
• retirer la phase liquide ayant une teneur réduite en biomasse des deux ou plusieurs décanteurs à plaques inclinées ; et
• transférer au moins une partie de la phase fluide enrichie en biomasse de la partie inférieure du séparateur de biomasse vers le bioréacteur ;
où le séparateur de biomasse a une surface au sol A de 0,5 à 30 m$^2$, ladite surface au sol étant égale à la surface horizontale qui est couverte par la projection verticale du séparateur de biomasse sur cette surface horizontale ; et où les deux ou plusieurs décanteurs à plaques inclinées comprennent un nombre total de n éléments de plaque inclinées qui, ensemble, fournissent une surface projetée totale (PSA) et un rapport de surface projetée totale (PSAR) qui sont calculés comme suit :

-

$$PSA = \sum_{i=1}^{n} psa_i$$

-

$$PSAR = PSA/A$$

$psa_i$ représentant la surface projetée globale de l'élément de plaque inclinée i en m$^2$, ladite surface projetée globale étant égale à la composante horizontale de la surface de l'élément de plaque inclinée ; et
où

$$PSAR \geq 2,8 + 0,17A ;$$

ou

• introduire dans le bioréacteur un mélange du liquide aqueux comprenant un substrat biodégradable et au moins une partie d'une phase fluide enrichie en biomasse qui est générée par les deux ou plusieurs décanteurs à plaques inclinées, où le mélange est produit

(i) en introduisant le liquide aqueux comprenant un substrat biodégradable dans la partie inférieure du séparateur de biomasse et en mélangeant ledit liquide aqueux avec au moins une partie de la phase fluide enrichie en biomasse ou
(ii) en introduisant à la fois le liquide aqueux comprenant un substrat biodégradable et au moins une partie de la phase fluide enrichie en biomasse dans une unité de mélange,
en mélangeant ledit liquide aqueux avec au moins une partie de la phase fluide enrichie en biomasse et en transférant le mélange dudit liquide aqueux et de l'au moins une partie d'une phase fluide vers le bioréacteur ;

• transférer le fluide traité qui comprend de la biomasse depuis la partie supérieure du bioréacteur à travers une entrée pour un flux comprenant du liquide traité (6) vers la partie supérieure du séparateur de biomasse ;
• séparer le fluide traité en une phase liquide ayant une teneur réduite en biomasse et une phase fluide enrichie en biomasse dans les deux ou plusieurs décanteurs à plaques inclinées, lesdits deux ou plusieurs décanteurs à plaques inclinées étant situés en dessous de l'entrée d'un flux comprenant du liquide traité ;
• retirer la phase liquide ayant une teneur réduite en biomasse des deux ou plusieurs décanteurs à plaques inclinées ;

où le séparateur de biomasse a une surface au sol A de 0,5 à 30 m$^2$, ladite surface au sol étant égale à la surface horizontale qui est couverte par la projection verticale du séparateur de biomasse sur cette surface horizontale ; et où les deux ou plusieurs décanteurs à plaques inclinées comprennent un nombre total de n éléments à plaques inclinées qui, ensemble, fournissent une surface projetée totale (PSA) et un rapport de surface projetée totale (PSAR) qui sont calculés comme suit :

$$PSA = \sum_{i=1}^{n} psa_i$$

$$PSAR = PSA/A$$

$psa_i$ représentant la surface projetée globale de l'élément de plaque inclinée i en m$^2$, ladite surface projetée gloabale étant égale à la composante horizontale de la surface de l'élément de plaque inclinée ; et
où PSAR $\geq$ 2,8 + 0,17A.

2. Procédé selon la revendication 1, où le séparateur de biomasse est actionné pour générer la phase liquide ayant une teneur réduite en biomasse à une vitesse d'écoulement d'au moins 20 m$^3$/heure/m$^2$, la vitesse d'écoulement étant calculée en divisant le débit de la phase liquide ayant une teneur réduite en biomasse par la surface au sol du séparateur de biomasse.

3. Procédé selon la revendication 1 ou 2, où le volume du séparateur de biomasse est au moins 5 fois plus petit que le volume du bioréacteur.

4. Procédé selon l'une quelconque des revendications précédentes, où la hauteur de la colonne de fluide dans le bioréacteur et la hauteur de la colonne de fluide dans le séparateur de biomasse ne diffèrent pas de plus de 5 %.

5. Procédé selon l'une quelconque des revendications précédentes, où le séparateur de biomasse a un rapport hauteur sur surface au sol supérieur à 1 m$^{-1}$.

6. Procédé selon l'une quelconque des revendications précédentes, où les éléments de plaque inclinées des deux ou plusieurs décanteurs à plaques inclinées sont constitués de plaques rectangulaires et où $psa_i$ est calculé comme suit :

$$psa_i = l_i \times w_i \times \cos(\Theta_i)$$

où

$l_i$ représente la longueur de la plaque inclinée l en m ;
$w_i$ représente la largeur de la plaque inclinée l en m ;
$\Theta_i$ représente l'inclinaison de la plaque inclinée i.

7. Procédé selon l'une quelconque des revendications 1 à 5, où les éléments à plaques inclinées des deux ou plusieurs décanteurs à plaques inclinées sont constitués de cônes à sommet ouvert qui sont empilés les uns sur les autres.

8. Procédé selon l'une quelconque des revendications 1 à 5, où les éléments à plaques inclinées des deux ou plusieurs décanteurs à plaques inclinées comprennent :

• au moins deux enceintes concentriques incluant une enceinte la plus externe et une enceinte la plus interne et définissant au moins une cavité concentrique ;
• un ou plusieurs canaux en forme de spirale formés dans l'au moins une cavité concentrique ;
• une entrée de fluide pour recevoir le fluide, située dans la partie inférieure de l'un ou plusieurs canaux en forme de spirale ;
• une sortie de solides, pour évacuer les solides compris dans le fluide, située dans une partie inférieure du dispositif de séparation ; et
• une sortie de liquides, pour évacuer les liquides compris dans le fluide, située dans la partie supérieure de l'un ou plusieurs canaux en forme de spirale.

9. Procédé selon l'une quelconque des revendications précédentes, où le liquide aqueux comprenant un substrat biodégradable est introduit dans la partie inférieure du bioréacteur.

10. Procédé selon l'une quelconque des revendications 1 à 8, où le séparateur de biomasse comprend une chambre de conditionnement qui est située sous les deux ou plusieurs décanteurs à plaques inclinées, où le liquide aqueux comprenant un substrat biodégradable est introduit dans ladite chambre de conditionnement où il est mélangé avec la phase fluide enrichie en biomasse, après quoi le mélange de liquide aqueux et de phase fluide est transféré vers la partie inférieure du bioréacteur.

11. Procédé selon l'une quelconque des revendications précédentes, où une partie de la phase fluide enrichie en biomasse qui est obtenue à partir des unités de séparation est renvoyée vers le bioréacteur et une autre partie est rejetée.

12. Procédé selon l'une quelconque des revendications précédentes, où le bioréacteur et le séparateur de biomasse comprennent tous deux un espace libre qui est rempli de biogaz, où l'espace libre du bioréacteur et l'espace libre du séparateur de biomasse sont reliés par une conduite de gaz, et où le procédé comprend le retrait du biogaz de l'espace libre du bioréacteur ou de l'espace libre du séparateur de biomasse.

13. Procédé selon l'une quelconque des revendications précédentes, où un écoulement tangentiel descendant est réalisé dans la partie supérieure du séparateur de biomasse.

14. Procédé selon l'une quelconque des revendications précédentes, où le bioréacteur et le séparateur de biomasse fonctionnent dans des conditions anaérobies.

15. Installation pour le traitement microbiologique d'un liquide aqueux comprenant un substrat biodégradable, où l'installation comprend :

> • un bioréacteur (1) comprenant :
>
>> - une entrée (4) pour un flux comprenant une phase fluide enrichie en biomasse ; et
>> - une sortie (5) pour le liquide traité, située dans la partie supérieure du bioréacteur ;
>
> • un séparateur de biomasse (2) qui est séparé du bioréacteur, comprenant :
>
>> - une entrée (6) pour un flux comprenant le liquide traité, située dans la partie supérieure du séparateur de biomasse, ladite entrée pour le liquide traité étant reliée de manière fluide à la sortie (5) du bioréacteur,
>> - deux ou plusieurs décanteurs à plaques inclinées (7) qui sont empilés les uns sur les autres, situés sous l'entrée (6), chaque décanteur à plaques inclinées ayant une sortie (8) pour la phase liquide ayant une teneur réduite en biomasse ;
>> - une sortie (9) pour le fluide enrichi en biomasse située dans la partie inférieure du séparateur de biomasse sous les deux ou plusieurs décanteurs à plaques inclinées, ladite sortie (9) étant reliée de manière fluide à l'entrée (4) du bioréacteur ;
>
> où le bioréacteur comprend une entrée (3) pour un liquide aqueux comprenant un substrat biodégradable ; et où le séparateur de biomasse a une surface au sol A de 0,5 à 30 m$^2$, ladite surface au sol étant égale à la surface horizontale qui est couverte par la projection verticale du séparateur de biomasse sur cette surface horizontale ; et où les deux ou plusieurs décanteurs à plaques inclinées comprennent un nombre total de n éléments de plaques inclinées qui, ensemble, fournissent une surface projetée totale (PSA) et un rapport de surface projetée totale (PSAR) qui sont calculés comme suit :
>
>> -
>>
>> $$PSA = \sum_{i=1}^{n} psa_i$$
>>
>> -
>>
>> $$PSAR = PSA/A$$
>
> $psa_i$ représentant la surface projetée globale de l'élément de plaque inclinée i en m$^2$, ladite surface projetée globale étant égale à la composante horizontale de la surface de l'élément de plaque inclinée ; et

où PSAR $\geq$ 2,8 + 0,17A ;
ou

- un bioréacteur (1) comprenant :

    - une entrée (4) pour un flux comprenant une phase fluide enrichie en biomasse ; et
    - une sortie (5) pour le liquide traité, située dans la partie supérieure du bioréacteur ;

- un séparateur de biomasse (2) qui est séparé du bioréacteur, comprenant :

    - une entrée (6) pour un flux comprenant un liquide traité située dans la partie supérieure du séparateur de biomasse, ladite entrée pour le liquide traité étant reliée de manière fluide à la sortie (5) du bioréacteur,
    - deux ou plusieurs décanteurs à plaques inclinées (7) qui sont empilés les uns sur les autres, situés sous l'entrée (6), chaque décanteur à plaques inclinées ayant une sortie (8) pour la phase liquide ayant une teneur réduite en biomasse ;
    - une sortie (9) pour un fluide enrichi en biomasse située dans la partie inférieure du séparateur de biomasse sous les deux ou plusieurs décanteurs à plaques inclinées, ladite sortie (9) étant reliée de manière fluide à l'entrée (4) du bioréacteur ;

où la partie inférieure du séparateur de biomasse comprend une entrée (3) pour un liquide aqueux comprenant un substrat biodégradable ; et
où le séparateur de biomasse a une surface au sol A de 0,5 à 30 m$^2$, ladite surface au sol étant égale à la surface horizontale qui est couverte par la projection verticale du séparateur de biomasse sur cette surface horizontale ; et
où les deux ou plusieurs décanteurs à plaques inclinées comprennent un nombre total de n éléments de plaques inclinées qui, ensemble, fournissent une surface projetée totale (PSA) et un rapport de surface projetée totale (PSAR) qui sont calculés comme suit :

-

$$PSA = \sum_{i=1}^{n} psa_i$$

-

$$PSAR = PSA/A$$

$psa_i$ représentant la surface projetée globale de l'élément de plaque inclinée i en m$^2$, ladite surface projetée globale étant égale à la composante horizontale de la surface de l'élément de plaque inclinée ; et
où PSAR $\geq$ 2,8 + 0,17A ;
ou

- un bioréacteur (1) comprenant :

    - une entrée (4) pour un flux comprenant une phase fluide enrichie en biomasse ; et
    - une sortie (5) pour le liquide traité, située dans la partie supérieure du bioréacteur ;

- un séparateur de biomasse (2) qui est séparé du bioréacteur, comprenant :

    - une entrée (6) pour un flux comprenant du liquide traité située dans la partie supérieure du séparateur de biomasse, ladite entrée pour le liquide traité étant reliée de manière fluide à la sortie (5) du bioréacteur,
    - deux ou plusieurs décanteurs à plaques inclinées (7) qui sont empilés les uns sur les autres, situés sous l'entrée (6), chaque décanteur à plaques inclinées ayant une sortie (8) pour la phase liquide ayant une teneur réduite en biomasse ;
    - une sortie (9) pour un fluide enrichi en biomasse située dans la partie inférieure du séparateur de biomasse sous les deux ou plusieurs décanteurs à plaques inclinées, ladite sortie (9) étant reliée de manière fluide à l'entrée (20) d'une unité de mélange (19), laquelle unité de mélange comprend une sortie (21) qui est reliée de manière fluide à l'entrée (4) du bioréacteur ;

où l'unité de mélange comprend une entrée (3) pour un liquide aqueux comprenant un substrat biodégradable ; et où le séparateur de biomasse a une surface au sol A de 0,5 à 30 m$^2$, ladite surface au sol étant égale à la surface horizontale qui est couverte par la projection verticale du séparateur de biomasse sur cette surface horizontale ; et où les deux ou plusieurs décanteurs à plaques inclinées comprennent un nombre total de n éléments de plaque inclinées qui, ensemble, fournissent une surface projetée totale (PSA) et un rapport de surface projetée totale (PSAR) qui sont calculés comme suit :

-

$$\text{PSA} = \sum_{i=1}^{n} psa_i$$

-

$$\text{PSAR} = \text{PSA/A}$$

$psa_i$ représentant la surface projetée globale de l'élément de plaque inclinée i en m$^2$, ladite surface projetée globale étant égale à la composante horizontale de la surface de l'élément de plaque inclinée ; et où PSAR $\geq$ 2,8 + 0,17A.

# Fig. 1

# Fig. 2

# Fig. 3

# Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010036107 A
- WO 2007078195 A
- WO 2012005592 A
- WO 2020038959 A
- EP 1134194 A
- WO 2020260354 A
- CN 2880214 Y

**Non-patent literature cited in the description**

- Standard Methods For the Examination of Water and Waste water. *2580 Oxidation-Reduction Potential (ORP)*, 27 August 2018